# EUROPÄISCHE PATENTANMELDUNG

(11) **EP 1 190 885 A2**
(43) Veröffentlichungstag der Anmeldung: **27.03.2002**
(21) Anmeldenummer: 01121051.5
(22) Anmeldetag: 01.09.2001
(51) Int. Cl.: B60K 31/04, G01M 17/02, G01N 19/00, G01L 5/00

(54) **Verfahren und System zur Geschwindigkeitsbegrenzung und/oder zur Ermittlung der Aufstandskraft eines Fahrzeugs**

(30) Priorität: 26.09.2000 DE 10047501; 03.07.2001 DE 10132207
(71) Anmelder: ROBERT BOSCH GMBH, 70442 Stuttgart (DE)
(72) Erfinder: Hessmert, Ulrich, 71701 Schwieberdingen (DE); Brachert, Jost, 71254 Ditzingen (DE); Sauter, Thomas, 71686 Remseck (DE); Wandel, Helmut, 71706 Markgroeningen (DE); Polzin, Norbert, 74374 Zaberfeld (DE)

(57) **Zusammenfassung**

Aufstandskräfte eines Fahrzeugs werden mittels als magnetisierende Flächen ausgebildeten Reifensensoren (102,103) durch derartiges Auswerten von erfassten Messsignalen (Sa,Si) in einer Auswerteeinheit (106) ermittelt, dass uber die durch die Sensoren erfassten Messsignale in der Auswerteeinheit eine Phasenlage zwischen den Messsignalen (Sa,Si) bestimmt wird, aus welcher durch einen Vergleich mit einem Referenzwert für eine voreingestellte Phasenlage ein Änderungswert ermittelt wird, aus welchem die Aufstandskraft für einen einzelnen Reifen des Fahrzeugs ermittelt wird. Ferner wird eine Geschwindigkeitsbegrenzung in Abhängigkeit einer Beladungsgröße des Fahrzeugs vorgeschlagen, die dann als Eingangsignal für ein Motor-Regelsystem (108) dienen kann.

## Beschreibung

### Stand der Technik

Die Erfindung betrifft ein Verfahren zur Geschwindigkeitsbegrenzung und/oder zur Ermittlung der Aufstandskraft eines Fahrzeugs und ein zugehöriges System.

Aus dem Stand der Technik sind vielfache Ausführungen von Systemen bekannt, welche die Geschwindigkeit eines Fahrzeugs auf einen Maximalwert begrenzen. Die Begrenzungsgeschwindigkeit wird dabei beispielsweise mit Blick auf die bei dem jeweiligen Fahrzeug verwendeten Reifen fest vorgegeben oder auch vom Fahrer einstellbar abgespeichert. Letzteres ist z.B. aus der DE-A 195 49 224 (US-Patent 5 992 551) bekannt.

Die Aufstandskraft eines Fahrzeugs, insbesondere eines Kraftfahrzeugs, ändert sich in Abhängigkeit vom Beladungszustand bzw. dem Gewicht des Fahrzeugs. Das bedeutet, dass Fahrzeuge aufgrund einer Zuladung, wie beispielsweise im Fahrzeugraum, im Kofferraum oder auf dem Dach, im Fahrbetrieb anders als im leeren Zustand reagieren. Durch eine zu hohe Zuladung kann es zu ungewollten Situationen im Fahrbetrieb kommen. So ist das Verhalten von hochbeladenen oder überladenen Fahrzeugen bei Kurvenfahrt bereits bei mäßiger Querbeschleunigung so ungünstig, dass ein Normalfahrer unter Umständen das Fahrzeug in der Kurve nicht mehr beherrschen kann. Dieses Verhalten verstärkt sich bei hoher oder unzulässig hoher Dachlast.

Im Stand der Technik sind Radkraftsensoren bekannt, deren Messsignale einer Auswerteeinheit zugeführt werden. Aus der DE 196 20 581 A1 ist eine Vorrichtung zur Ermittlung des Drehverhaltens eines Fahrzeugrades bekannt, wobei in Umfangsrichtung des Rads gleichmäßig angeordnete magnetisierende Flächen mit abwechselnder Polarität vorgesehen sind. Die Flächen sind in die Reifenwand eingearbeitet oder auf der Reifenwand aufgebracht. Ein Messwertaufnehmer weist zwei oder mehrere, im unterschiedlichen radialen Abstand von der Drehachse angeordnete Messelemente auf, so dass bei einer Verformung des Reifens infolge der an einem Reifen angreifenden Kräfte bzw. infolge der übertragenen Antriebs- oder Bremsdrehmomente eine Änderung der Phasenlage zwischen den von den Messelementen abgegebenen Messsignalen auftritt. Die Änderung der Phasenlage ist dann als Maß für die von dem Rad bzw. dem Reifen auf die Fahrbahn übertragenen Momente und/oder des momentanen Reibbeiwertes auswertbar.

Andere Möglichkeiten zur Bestimmung der Aufstandskräfte sind eine Messung der Aufstandskräfte über Sensoren, die beispielsweise direkt im Bereich der Abstützkräfte des Fahrzeugs auf die Fahrzeugachse sich befinden und die diese messen, die Gewichtserfassung über eine Waage bzw. die Eingabe des aktuellen Fahrzeuggewichts durch den Fahrer oder durch Bestimmung der Fahrzeugmasse über eine Momentenbilanz (vgl. z.B. DE-A1 42 28 413).

### Vorteile der Erfindung

In vorteilhafter Weise wird durch die Begrenzung der Geschwindigkeit bis hin zur Fahrzeugstilllegung in Abhängigkeit von der Zuladung oder Beladung bzw. dem Gewicht oder der Masse des Fahrzeugs die Verkehrssicherheit erhöht, da ungewollte Verkehrssituationen bei hochbeladenen oder überladenen Fahrzeugen, insbesondere bei Kurvenfahrt, weitgehend vermieden werden.

Besonders vorteilhaft ist, wenn die Aufstandskraft aus Radkraftsensoren abgeleitet wird.

Insbesondere kann durch das erfindungsgemäße Verfahren und das zugehörige System zur Ermittlung der Aufstandskraft eines Fahrzeugs die Fahrsicherheit erhöht werden. Kritischen Fahrzuständen kann durch eine Begrenzung der Fahrzeuggeschwindigkeit und/oder durch Auslösen einer Anfahrsperre entgegengewirkt werden. Im Falle einer fahrkritischen Beladung des Fahrzeugs ist eine Anfahrsperre vorzuziehen. Bei einer Beladung des Fahrzeugs ist eine Anfahrsperre vorzuziehen. Bei einer Beladung, die zwar groß ist, bei der aber ein Fahrbetrieb möglich ist, ist eine Begrenzung der Fahrzeuggeschwindigkeit auf eine für die Beladung bzw. Belastung sichere Höchstgeschwindigkeit vorzuziehen.

Durch die aufgrund einer ermittelten zu hohen Aufstandskraft eines Fahrzeugs bewirkten Maßnahmen in Bezug auf die Begrenzung der Fahrzeuggeschwindigkeit könnten kritische Fahrzustände, wie sie durch zu hohe Reifentemperaturen oder durch geändertes Fahrverhalten des Fahrzeugs entstehen, vermieden werden.

### Zeichnung

Die Erfindung wird nachstehend anhand der in der Zeichnung beschriebenen Ausführungsbeispiele näher erläutert.
Figur 1 zeigt ein Blockschaltbild eines Systems zur Ermittlung der Aufstandskraft eines Fahrzeugs;
Figur 2a bis 2c zeigen in symbolischer Darstellung einen Ausschnitt aus einer Reifenwandung und das Ausgangssignal eines Messwertaufnehmers jeweils im unbelasteten Zustand (Fig. 2a) und im belasteten Zustand (Fig. 2b und 2c);
Figur 3 zeigt ein Ablaufdiagramm zum Kalibrieren eines Werts für eine als Referenz verwendete Aufstandskraft;
Figur 4 zeigt ein Ablaufdiagramm zum Ermitteln einer Aufstandskraft; und
Figur 5 zeigt ein Ablaufdiagramm zur Geschwindigkeitsbegrenzung abhängig von einer Größe, die die Beladung, das Gewicht, die Masse, etc. des Fahrzeugs beschreibt.

### Beschreibung von Ausführungsbeispielen

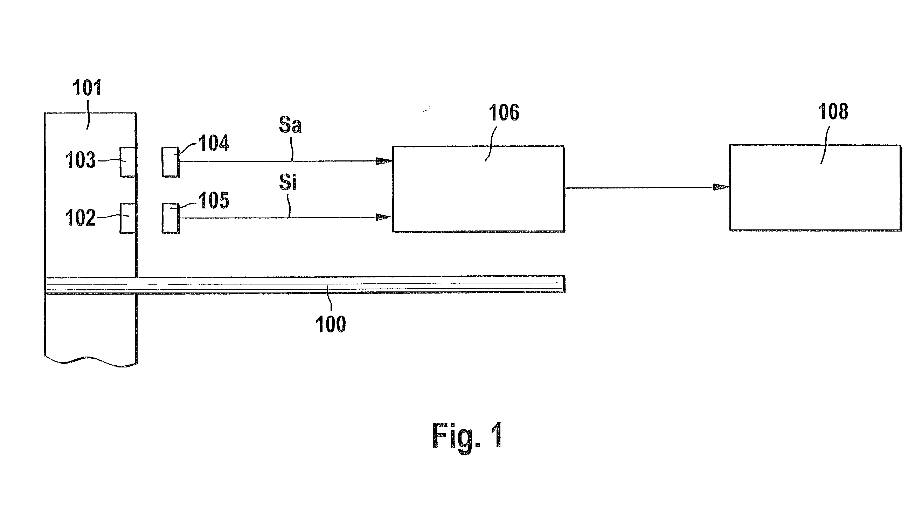

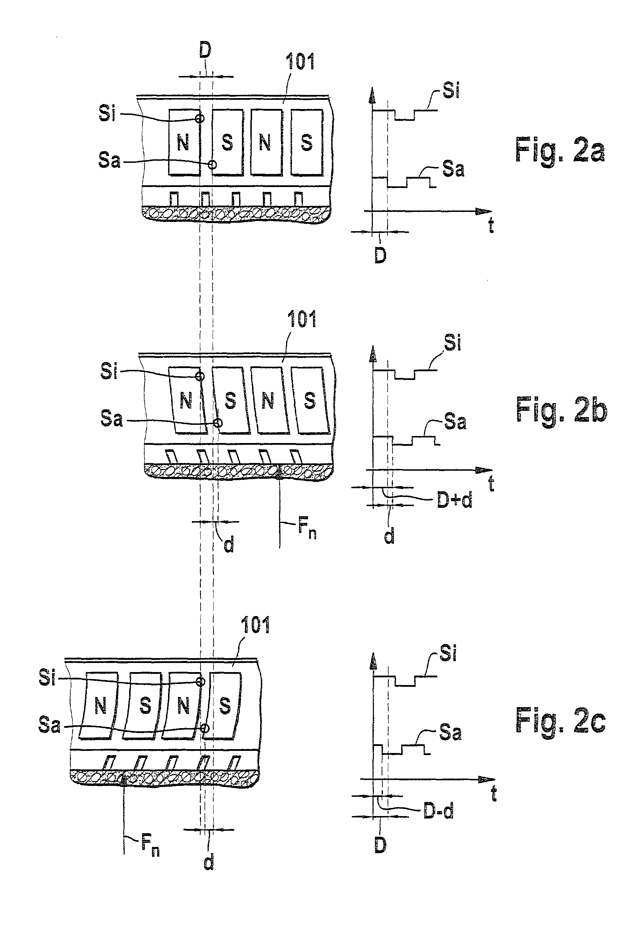

In Figur 1 ist ein Blockschaltbild eines Systems zur Ermittlung der Aufstandskraft eines Fahrzeugs gemäß der vorliegenden Erfindung gezeigt. An einem Reifen 101, der stellvertretend für alle Reifen am Fahrzeug gezeigt ist, sind als Messwertgeber magnetisierende Flächen (Streifen) 102, 103 mit vorzugsweise in Umfangsrichtung verlaufenden Feldlinien vorgesehen, wie sie deutlicher in Figur 2 zu sehen sind. Die magnetisierenden Flächen 102, 103 können in den Reifen 101 eingearbeitet sein oder am Äußeren des Reifens 101 vorgesehen sein. Die Magnetisierung erfolgt abschnittsweise immer in gleicher Richtung, aber mit entgegengesetzter Orientierung, d. h. sie hat eine abwechselnde Polarität. In der Figur 1 ist die magnetisierende Fläche mit positiver Polarität mit 102 bezeichnet, während die magnetisierende Fläche mit negativer Polarität mit 103 bezeichnet ist. Die magnetisierten Streifen 102 und 103 verlaufen vorzugsweise in Felgenhornnähe und in Latschnähe des Reifens. Die Messwertgeber 102 und 103 reagieren somit umgehend auf eine Krafteinwirkung auf den Reifen.

Messwertaufnehmer 104 und 105 sind karosseriefest an zwei oder mehreren in Drehrichtung unterschiedlichen Stellen angebracht und haben zudem noch einen von der Drehachse oder der Radachse 100 unterschiedlichen radialen Abstand. Dadurch ergeben sich ein inneres Signal Si, das der Messwertaufnehmer 104 in der Nähe der Radnabe erfasst, und ein äußeres Signal Sa, das der von der Radnabe weiter entfernte Messwertaufnehmer 105 erfasst. Die Messsignale Si und Sa sind mit einer Phasenlage D zueinander phasenversetzt, wie es in Figur 2a für einen Reifen des Fahrzeugs, auf den keine Kraft einwirkt, gezeigt ist. Das bedeutet, dass die Phasenlage D bei einem unbeladenen Fahrzeug der Abstand zwischen dem inneren Signal Si und dem äußeren Signal Sa ist. Diese Phasenlage D repräsentiert die Aufstandskraft des Fahrzeugs in einem jeweiligen Rad.

Eine Wirkung einer Kraft auf den Reifen 101 wird über die sich ändernde Polarität der Messsignale Si und Sa vorzugsweise in Umfangsrichtung erkannt. Die erfassten Messsignale Si und Sa mit ihren jeweiligen Amplituden und Phasen werden einer in Figur 1 gezeigten Auswerteeinheit 106 zur Ermittlung von Phasenlagen D zugeführt, die mit Hilfe des jeweils bekannten inneren und äußeren Umfangs des Reifens 101 entsprechend der Anordnung der Messaufnehmer 104, 105 die auch Reifensensoren genannt werden, Aufstandskräfte repräsentierende Signale berechnet, die dann als Eingangssignale für ein Motor-Regelsystem 108 dienen können. Die Auswerteeinheit 106 ermittelt eine Änderung der Phasenlage um +d oder -d zwischen dem inneren Signal Si und dem äußeren Signal Sa, welche Änderung eine Verformung des Reifens 101 beim Fahren oder beim Abbremsen, oder, bei Fahrzeugstillstand, beim Beladen angibt. Zur Darstellung dieser Änderung der Phasenlage der Messsignale Si, Sa wird auf die Figuren 2b und 2c Bezug genommen, die im Vergleich mit der Figur 2a eine Verformung des Reifens 101 zeigen.

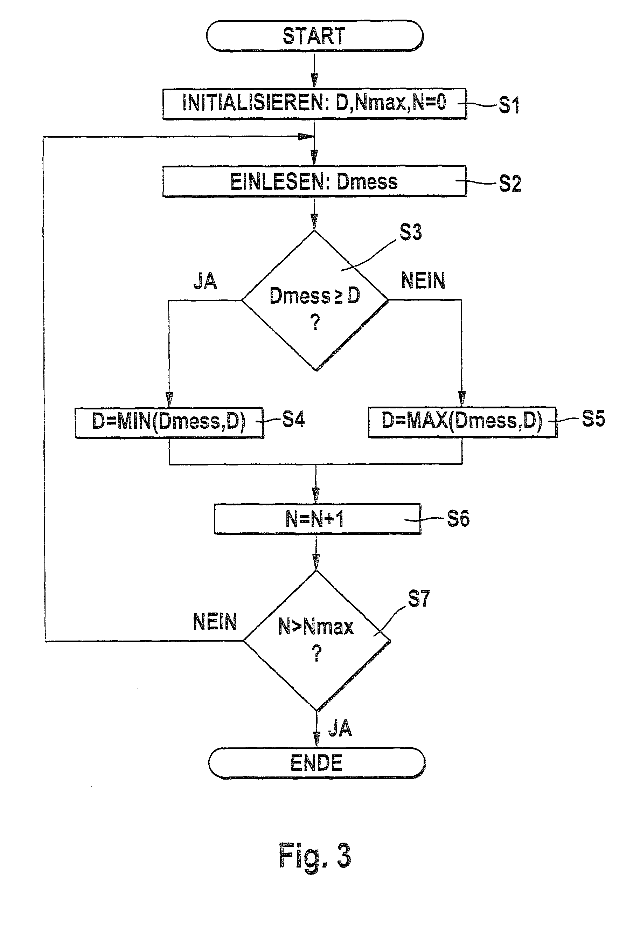

Bei einer Verformung bzw. Deformation des Reifens 101 infolge von an ihm wirkenden Kräften, wie beispielsweise während einer Fahrt oder bei einem Abbremsen ober bei einer aufgrund einer Beladung des Fahrzeugs auf den Reifen wirkenden Kraft, tritt eine Verschiebung der Phasenlage D zwischen dem inneren Signal Si und dem äußeren Signal Sa auf. Der Bereich der Verschiebung bewegt sich zwischen D und (D+d) und zwischen D und (D-d), wie es jeweils in den Figuren 2b und 2c gezeigt ist. Dabei entspricht bei einem fahrenden Fahrzeug die Verschiebung zwischen D und (D+d) der positiven Drehrichtung, d. h. einer Vorwärtsfahrt des Fahrzeugs, und entspricht die Verschiebung zwischen D und (D-d) der negativen Drehrichtung , d. h. einer Rückwärtsfahrt des Fahrzeugs. Bei einem sich nicht bewegenden Fahrzeug kann bei einer Beladung die Verschiebung entweder zwischen D und (D+d) oder zwischen D und (D-d) erfolgen, wobei es allerdings bei der Bauweise heutiger Fahrzeuge wahrscheinlicher ist, dass die Verschiebung bzw. eine Änderung zwischen D und (D+d) erfolgt. Aus der Änderung d. der Phasenlage D, die im Folgenden auch "Abstand" genannt wird, kann die Aufstandskraft Fn eines Fahrzeugs an einem Fahrzeugrad 101 berechnet werden. Bevor ein Verfahren zur Ermittlung der Aufstandskraft Fn eines Fahrzeugs beschrieben wird, werden im folgenden unter Bezugnahme auf Figur 3 Möglichkeiten zum Bestimmen eines be der Ermittlung der Änderung +d oder -d des Abstands D nötigen Referenzwerts beschrieben.

Der Abstand D zwischen den Sensoren 104 und 105 bei einem Fahrzeug, das sich nicht bewegt und in einem unbeladenen Zustand ist, kann am Ende einer Fahrzeugherstellung als Referenzwert bestimmt werden. Alternativ dazu kann der Referenzwert für den Abstand D für ein Fahrzeug, das sich nicht bewegt und gleichzeitig im unbeladenen Zustand ist, bei jedem Fahrbeginn aus mehreren gemessenen Werten Dmess für den Abstand ermittelt und gelernt werden.

Ein Beispiel für ein Lernen eines Referenzwerts D für den Abstand wird nun anhand des in Figur 3 gezeigten Ablaufdiagramms erklärt. In einem Schritt S1 wird bei einer Initialisierung, die beispielsweise durch Betätigung des Zündschlüssels eingeleitet werden kann, ein Startwert D für den Abstand beispielsweise auf einen dem Abstand zwischen den Sensoren 104, 105 am Fahrzeug entsprechenden Wert eingestellt. Weiterhin wird im Schritt S1 ein Zähler N auf Null gesetzt und ein maximaler Zählwert Nmax, wie beispielsweise 10, festgelegt. Die Einstellung des Startwerts D für den Abstand und des Zählers N kann durch Auslesen der Werte aus einem Speicher erfolgen.

In einem Schritt S2 wird ein neuer erfasster Wert für den Abstand, nämlich Dmess, eingelesen. In einem Schritt S3 wird der gemessene Abstand Dmess mit dem im Schritt S1 eingestellten Startwert D für den Abstand verglichen. Dieser Vergleich ist vorgesehen, damit eine Kalibrierung nicht nur bei einer langsamen Vorwärtsfahrt des Fahrzeugs, für die gemäß Figur 2b die Beziehung Dmess = D + d gilt, sondern ebenso bei einer langsamen Rückwärtsfahrt des Fahrzeugs, für die gemäß Figur 2c die Beziehung Dmess = D - d gilt, möglich ist. Ist der gemessene Abstand Dmess größer als der oder gleich dem Startwert D für den Abstand, was einer Vorwärtsfahrt entspricht, wird in einem Schritt S4 ein neuer Wert D für den Abstand durch Bildung des Minimums aus den im Schritt S3 verglichenen Werten D und Dmess festgelegt. Ist gegensätzlich dazu der gemessene Abstand Dmess kleiner als der Startwert D für den Abstand, was einer Rückwärtsfahrt entspricht, wird in einem Schritt S5 ein neuer Wert D für den Abstand durch Bildung des Minimums aus den in Schritt S3 verglichenen Werten D und Dmess festgelegt. Nachdem ein neuer Wert D für den Abstand D festgelegt worden ist, wird der Zählwert N in einem Schritt S6 weitergeschaltet. In einem Schritt S7 wird dann überprüft, ob der neue Zählwert N schon größer als der im Schritt S1 festgelegte Maximalwert Nmax ist oder nicht. Ist der neue Zählwert N noch nicht größer als der Maximalwert Nmax, erfolgt ein Rücksprung zum Schritt S2, in welchem ein weiterer gemessener Wert Dmess für den Abstand eingelesen wird. Das zuvor beschriebene Verfahren wird mit dem im Schritt S4 oder im Schritt S5 ermittelten Wert D für den Abstand anstelle des im ersten Durchlauf der Schleife zur Verfügung stehenden und im Schritt S1 eingestellten Werts D für den Abstand wiederholt. In der Zählwert N im Schritt S7 größer als der Maximalwert Nmax, erfolgt eine Beendigung des Verfahrens zum Kalibrieren eines Referenzwerts für die Aufstandskraft D.

Der ab Werk vorgegebene oder wie vorangehend beschriebenen ermittelte Referenzwert D für den Abstand wird zur weiteren Verwendung in einem in der Auswerteeinheit 106 vorgesehenen Speicher abgespeichert.

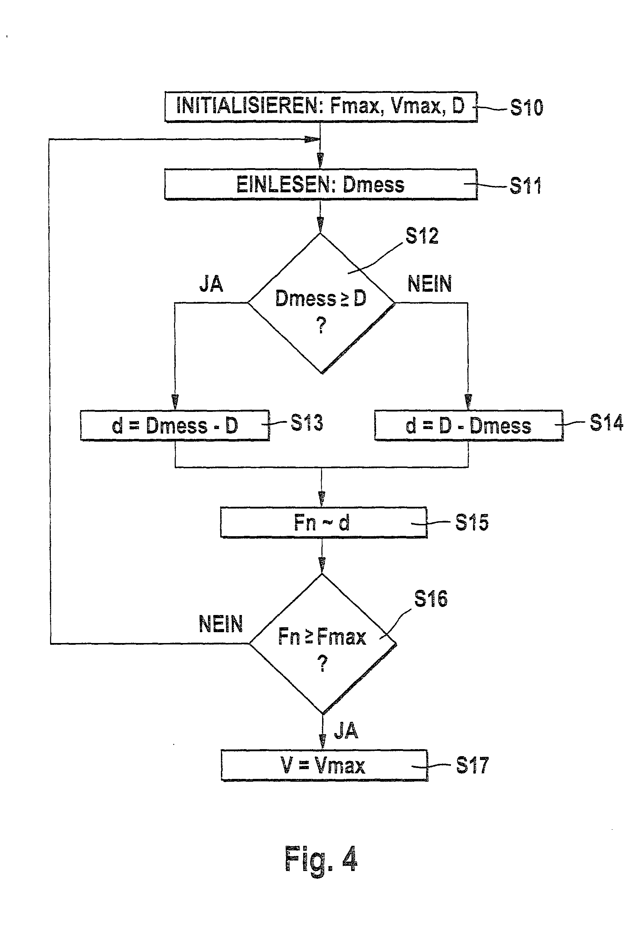

Nun wird unter Bezugnahme auf Figur 4 ein erfindungsgemäßes Verfahren zum Ermitteln einer Aufstandskraft Fn beschrieben.

In einem Schritt S10 werden bei einer Initialisierung, die beispielsweise durch Betätigung des Zündschlüssels eingeleitet werden kann, ein maximal zulässiger Wert Fmax für die Aufstandskraft und ein Wert Vmax für eine maximale Geschwindigkeit eingestellt. Weiterhin wird der zuvor festgelegte Referenzwert D für den Abstand ausgelesen. Wie der Referenzwert D für den Abstand können auch der maximal zulässiger Wert Fmax für die Aufstandskraft und der Wert Vmax für eine maximale Geschwindigkeit im Voraus in einem Speicher gespeichert sein.

In einem Schritt S11 erfolgt ein Einlesen eines bei einer Beladung des Fahrzeugs gemessenen Abstands Dmess. Das Messen des Abstands Dmess erfolgt dabei vorzugsweise bei Fahrzeugstillstand. Danach wird in einem Schritt S12 der gemessene Abstand Dmess mit dem Referenzwert D für einen Abstand verglichen, um festzustellen, ob eine Vergrößerung des Abstands oder eine Verkleinerung des Abstands entsprechend einer statischen Verformung des Reifens erfolgt. Der Vergleich im Schritt S12 ist notwendig, damit im weiteren Verfahren die richtige Berechnung der Änderung d gemäß Figur 2b oder Figur 2c erfolgen kann. Da nicht davon ausgegangen werden kann, dass sich ein Reifen bei einer Beladung eines Fahrzeugs bei Fahrzeugstillstand nur gemäß einer Figur 2b gezeigten Änderung +d verformt, und eine Änderung -d gemäß Figur 2c ebenso möglich ist, wird vorab darüber entschieden, welche Änderung vorliegt. Ist der gemessene Abstand Dmess größer als der oder gleich dem Referenzwert D für einen Abstand , wird in einem Schritt S13 die Änderung d der Verformung aus Dmess-D berechnet. Ist dagegen der gemessene Abstand Dmess kleiner als der Referenzwert D für einen Abstand, wird in einem Schritt S14 die Änderung d der Verformung aus D - Dmess berechnet. Nach der Berechnung der Änderung d wird in einem Schritt S15 aus dieser statischen Verformung des Reifens, die der aktuellen Aufstandskraft entspricht, die Aufstandskraft Fn ermittelt. Die Umrechnung der Änderung d in die Aufstandskraft Fn kann über ein Kennlinienfeld erfolgen, das in einem Speicher abgelegt ist.

Nach der Ermittlung der aktuellen Aufstandskraft Fn kann ein Vergleich der aktuellen Aufstandskraft Fn mit dem im Schritt S10 eingestellten maximal zulässigen Wert Fmax für die Aufstandskraft erfolgen, wie es in einem Schritt S16 gezeigt ist. Ist die aktuelle Aufstandskraft Fn kleiner als der maximal zulässige Wert Fmax für die Aufstandskraft, kann zum Schritt S11 des Verfahrens für ein neues Einlesen eines gemessenen Abstands Dmess zurückgesprungen werden. Erreicht die aktuelle Aufstandskraft Fn jedoch den maximal zulässigen Wert Fmax für die Aufstandskraft oder ist sogar größer als dieser, kann eine Signalgabe zum in Figur 1 gezeigten Motor-Regelsystem 108 erfolgen, um dort die Geschwindigkeit des Fahrzeugs auf eine maximale Geschwindigkeit zu begrenzen. Die Begrenzung der Geschwindigkeit kann als Anfangsperre ausgeführt werden, indem beispielsweise die Höchstgeschwindigkeit auf Null festgelegt wird. Zusätzlich kann ein akustisches oder visuelles Warnsignal für einen Fahrer ausgegeben werden.

Wie es oben beschrieben ist, kann erfindungsgemäß vor Fahrtbeginn die aktuelle Aufstandskraft Fn für alle Fahrzeugräder ermittelt werden. Sobald ein zu hoher Wert der Aufstandskraft Fn ermittelt wird, kann eine Geschwindigkeitsbegrenzung des Fahrzeugs über einen Motoreneingriff erfolgen. Dadurch kann verhindert werden, dass ein Fahrzeug aufgrund einer Überladung ein kritisches Fahrverhalten zeigt. Weiterhin kann eine mögliche Schädigung des Reifens durch thermische Überbeanspruchung vermieden werden.

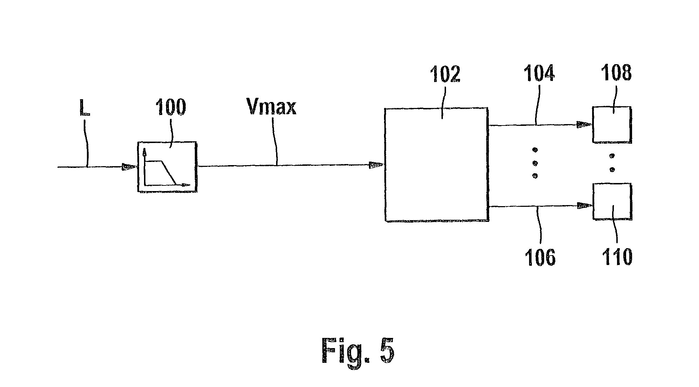

Figur 5 beschreibt ein Ablaufdiagramm, welches zur Begrenzung der Maximalgeschwindigkeit eines Fahrzeugs in Abhängigkeit der Fahrzeugbeladung, des -gewichts oder der -masse dient. Dieses Ablaufdiagramm stellt im bevorzugten Ausführungsbeispiel das Programm wenigstens eines Mikrocomputers dar. In anderen Ausführungsbeispielen werden die dargestellten Abläufe in unterschiedlichen Steuereinheiten und unterschiedlichen Mikroprozessoren ausgeführt, wobei die Verbindung mittels Bussystemen erfolgt. Im Grundsatz wird bei den Fahrzeugen der Beladungszustand, das Gewicht oder die Masse erfasst. Danach wird automatisch abhängig von dieser Größe eine Maximalgeschwindigkeit festgelegt. Der Fahrer wird in einem bevorzugten Ausführungsbeispiel über diese Begrenzung informiert, beispielsweise mittels einer Anzeigelampe oder mittels Einblendung der Maximalgeschwindigkeit. Bei Überschreitung, insbesondere bei extremer Überschreitung des zulässigen Gesamtgewichts bzw. Beladung des Fahrzeugs, wird als Maximalgeschwindigkeit der Wert Null vorgegeben, d. h. das Fahrzeug wird automatisch stillgelegt.

Die Festlegung der maximalen Fahrgeschwindigkeit erfolgt im bevorzugten Ausführungsbeispiel in einem ersten System, beispielsweise in der Steuereinheit, in der der Beladungszustand oder das Gewicht bzw. die Masse des Fahrzeugs vorliegt (beispielsweise der Bremsensteuereinheit). Die Information über die zu begrenzende Geschwindigkeit bzw. der Geschwindigkeitsgrenzwert selbst werden dann über Bussysteme anderen Fahrzeugsystemen zugeführt, die als Stellglieder zur Begrenzung der Geschwindigkeit wirken, beispielsweise der Motorsteuerung, Getriebesteuerung, Retardersteuerung, etc. Sobald das System, welches die Notwendigkeit einer Geschwindigkeitsbegrenzung wegen großer Beladung bzw. Gewicht ermittelt (im folgenden auch Überwachungseinrichtung genannt), eine solche beladungs- bzw. gewichtsbedingte Geschwindigkeitsbegrenzung für sinnvoll erachtet, wird diese Information an die oben genannten anderen Systeme weitergegeben. Diese begrenzen die Maximalgeschwindigkeit des Fahrzeugs oder legen das Fahrzeug still. Als Stellglied kann dabei auch nur eines der oben genannten Systeme in Betracht kommen, dieses kann auch gleichzeitig Überwachungseinrichtung sein.

Die fahrzeugspezifische Beladungsinformation wird der Überwachungseinrichtung zugeführt. Diese Beladungsinformation kann aus der Messung von Aufstandskräften, beispielsweise wie vorstehend beschrieben über Radlager- oder Reifensensoren, über Achslastsensoren, etc. erfolgen. Andere Möglichkeiten der Beladungserfassung erfolgt durch Fahrereingabe, durch Gewichtserfassung über eine Waage oder durch Berechnen der Momentenbilanz wie im oben genannten Stand der Technik angegeben. Diese Größe werden je nach Ausführung einzeln oder in beliebiger Kombination eingesetzt. Dabei kann das Gewicht auch an verschiedenen Stellen auf unbterschiedliche oder gleiche Art gemessen werden und daraus das tatsächliche Gewicht abgeleitet werden.

Nach der Zustandserkennung wird die maximal fahrbare Geschwindigkeit festgelegt und die Geschwindigkeit des Fahrzeugs auf diesen Wert begrenzt. Als Stellglieder kommen dabei wie oben erwähnt Motorsteuerung, Retardersteuerung, Getriebesteuerung und/oder die Steuerung der Radbremsen in Frage.

Das die Beladung oder das Gewicht bzw. die Masse des Fahrzeugs repräsentierende Signal L wird der Überwachungseinrichtung 100 zugeführt, in der je nach Ausführung diese Größe mit wenigstens einem Grenzwert verglichen wird, um die Notwendigkeit der Geschwindigkeitsbegrenzung zu erfassen und dessen Ausmaß festzustellen. In anderen Ausführungsbeispielen wird nach Maßgabe einer Kennlinie, einem Kennfeld oder einer Tabelle abhängig von der Größe die Grenzgeschwindigkeit Vmax ermittelt. Diese Grenzgeschwindigkeit bzw. die Information über die Notwendigkeit der Geschwindigkeitsbegrenzung wird wenigstens einer Steuereinheit 102 zugeführt, die die Geschwindigkeitsbegrenzung durchführt. Dies erfolgt beispielsweise mittels eines Reglers, welcher die Abweichung zwischen Maximalgeschwindigkeit und Istgeschwindigkeit des Fahrzeugs in Ansteuersignale für die Geschwindigkeit beeinflussenden Stellgliedern wie Drosselklappe, Kraftstoffzufuhr, Bremsen, Retarder, Getriebe, etc. umsetzt. In anderen Ausführungsbeispielen, in denen die Information über die Geschwindigkeitsbegrenzung übermittelt wird, wertet die Steuereinheit 102 diese Information aus und begrenzt die Geschwindigkeit auf einen abhängig von dieser Information ermittelten Grenzwert. Ist die Beladung bzw. das Gewicht so groß, dass eine Überladung des Fahrzeugs auftritt, ist der Geschwindigkeitsgrenzwert Null.

In anderen Ausführungsbeispielen erfolgt die Geschwindigkeitsbegrenzung durch mehrere Steuereinheiten, so dass der Grenzwert bzw. die Information über ein Bussystem an mehrere Steuereinheiten (Motorsteuerung, Getriebesteuerung, Bremsensteuerung, Retardersteuerung) verteilt wird. Die Steuereinheit 102 steuert dann über die wenigstens eine Ausgangsleitung 104-106 Stellglieder 108-110 an, welche die Geschwindigkeit durch Motoreingriff, Bremseneingriff, Getriebeeingriff, etc. reduzieren.

Bei der Erfassung von Beladung oder Zuladung wird ein Referenzwert angegeben, wobei Beladung oder Zuladung die Abweichung des tasächlichen Gewichts von diesem Referenzwert bedeutet.

## Patentansprüche

1. Verfahren zur Geschwindigkeitsbegrenzung eines Fahrzeugs, wobei wenigstens eine Größe ermittelt wird, die die Beladung oder die Zuladung oder das Gewicht oder die Masse des Fahrzeugs repräsentiert, abhängig von dieser Größe eine Maximalgeschwindigkeit des Fahrzeugs abgeleitet wird und die Geschwindigkeit des Fahrzeugs auf diese Maximalgeschwindigkeit begrenzt wird.

2. Verfahren nach Anspruch 1, **dadurch gekennzeichnet, dass** bei Überladung des Fahrzeugs der Geschwindigkeitsgrenzwert Null ist.

3. Verfahren, insbesondere nach einem der vorhergehenden Ansprüche, **dadurch gekennzeichnet, dass** abhängig von der Größe in einer Überwachungseinrichtung ein Maximalgeschwindigkeitswert abgeleitet wird bzw. eine Information über die Notwendigkeit einer Geschwindigkeitsbegrenzung und gegebenenfalls deren Ausmaß ermittelt wird und an wenigstens eine, die Geschwindigkeit beeinflussende Steuereinheit übermittelt wird.

4. Verfahren zur Ermittlung der Aufstandskraft eines Fahrzeugs, insbesondere nach einem der vorhergehenden Ansprüche, wobei zur Ermittlung von auf die einzelnen Räder wirkenden Kräften Radkraftsensoren (104, 105) eingesetzt sind, deren Messsignale (Si, Sa) einer Auswerteeinheit (106) zugeführt werden, **dadurch gekennzeichnet, dass** über die durch die Sensoren (104, 105) erfassten Messsignale (Si, Sa) in der Auswerteeinheit (106) eine Phasenlage (Dmess) zwischen den Messsignalen (Si, Sa) bestimmt wird, aus welcher durch einen Vergleich mit einem Änderungswert (d) ermittelt wird, aus welchem die Aufstandskraft (Fn) für einen einzelnen Reifen (101) des Fahrzeugs ermittelt wird.

5. Verfahren nach Anspruch 4, **dadurch gekennzeichnet, dass** die Aufstandskraft (Fn) aus dem Änderungswert (d) durch Verwendung eines Kennlinienfeldes ermittelt wird.

6. Verfahren nach einem der Ansprüche 4 oder 5, **dadurch gekennzeichnet, dass** der Referenzwert (D) für eine voreingestellte Phasenlage zwischen den Messsignalen (Si, Sa) bei einem Neuwagen nach seiner Fertigung bestimmt wird oder bei jedem Fahrtbeginn bei langsamer Vorwärtsfahrt als Minimum oder bei langsamer Rückwärtsfahrt als Maximum aller zwischen den Messsignalen (Si, Sa) bestimmten Phasenlagen (Dmess) bestimmt wird.

7. Verfahren nach einem der vorangehenden Ansprüche, **dadurch gekennzeichnet, dass** der Änderungswert (d) je nach Richtung der Verformung des Reifens aus einer Subtraktion des Referenzwerts (D) von der ermittelten Phasenlage (Dmess) oder aus einer Subtraktion der ermittelten Phasenlage (Dmess) von dem Referenzwert (D) berechnet wird.

8. Verfahren nach einem der vorangehenden Ansprüche, **dadurch gekennzeichnet, dass** dann, wenn die ermittelte Aufstandskraft (Fn) größer als eine maximal zulässige Aufstandskraft (Fmax) ist, die Fahrgeschwindigkeit (V) auf eine Höchstgeschwindigkeit (Vmax) begrenzt wird.

9. Verfahren nach Anspruch 8, **dadurch gekennzeichnet, dass** die Höchstgeschwindigkeit (Vmax) auf Null eingestellt werden kann.

10. System zur Geschwindigkeitsbegrenzung eines Fahrzeugs, mit einer Überwachungseinrichtung, die wenigstens eine Größe ermittelt, die die Beladung oder die Zuladung oder das Gewicht oder die Masse des Fahrzeugs repräsentiert, die auf der Basis dieser Größe eine Grenzgeschwindigkeit des Fahrzeugs vorgibt, auf die die Geschwindigkeit des Fahrzeugs begrenzt wird.

11. System nach Anspruch 10, **dadurch gekennzeichnet, dass** die Überwachungseinrichtung den Geschwindigkeitsgrenzwert an andere Steuersysteme übermittelt, die die Geschwindigkeit mittels Ansteuern wenigstens eines Stellglieds begrenzen.

12. System mit Reifensensoren, insbesondere nach einem der Ansprüche 10 oder 11, mit einer Auswerteeinheit (106) und einem Motor-Regelsystem (108) zum Durchführen des Verfahrens nach einem der vorangehenden Ansprüche, wobei die Reifensensoren Messwertgeber (102, 103) am Reifen (101) und karosseriefeste Messwertaufnehmer (104, 105) aufweisen.

13. System nach Anspruch 12, **dadurch gekennzeichnet, dass** die Auswerteeinheit (106) wenigstens einen Speicher aufweist, in welchem das Kennlinienfeld für eine Korrelation zwischen der Aufstandskraft (Fn) und dem Änderungswert (d) abgelegt ist.

14. System nach Anspruch 12 oder 13, **dadurch gekennzeichnet, dass** die Auswerteeinheit (106) wenigstens einen Speicher aufweist, in welchem der Referenzwert (D) für eine voreingestellte Phasenlage zwischen den Messsignalen (Si, Sa) abgespeichert ist.

15. System nach einem der Ansprüche 12 bis 14, **dadurch gekennzeichnet, dass** das Motor-Regelsystem (108) ein Signal empfängt, wenn die ermittelte Aufstandskraft (Fn) größer als eine maximal zulässige Aufstandskraft (Fmax) ist, und bei Empfang dieses Signals die Fahrgeschwindigkeit (V) auf eine Höchstgeschwindigkeit (Vmax) begrenzt.

16. System nach einem der Ansprüche 12 bis 15, **dadurch gekennzeichnet, dass** die Auswerteeinheit (I106) zur Benachrichtigung des Fahrers ein akustisches oder visuelles Warnsignal abgibt, wenn die ermittelte Aufstandskraft (Fn) größer als eine maximal zulässige Aufstandskraft (Fmax) ist.
